# EUROPEAN PATENT APPLICATION

(11) **EP 4 797 465 A1**
(43) Date of publication of application: **26.08.2026**
(21) Application number: 26158178.9
(22) Date of filing: 12.02.2026
(51) Int. Cl.: H01R 13/625

(54) **INTERFACE FOR WATER AND ELECTRICAL TRANSMISSION**

(30) Priority: 25.02.2025 GB 202502732
(71) Applicant: Harting International Innovation AG, 2504 Biel (CH)
(72) Inventor: Cording, Christian, 2504 Biel (CH); Friesen, Markus, 2504 Biel (CH)

(57) **Abstract**

The present disclosure relates to a connector assembly including a first connector (1) with a housing (12), a female bayonet locking element (11), and at least one first centering element (13), and a second connector (2) with at least one male bayonet locking element (21) and at least one second centering element (23). The connectors can be connected and disconnected by relative movement parallel to an insertion axis (X). The housing (12) dimension parallel to the insertion axis (X) corresponds to a housing length (a). The female bayonet locking element (11) is displaceable relative to the housing (12) parallel to the insertion axis (X) into a rearward position, wherein the total connector length (b) is reduced.

## Description

### FIELD OF THE INVENTION

The present invention relates to connector assemblies, specifically to those comprising a first connector with a housing and a female bayonet locking element, and a second connector with a male bayonet locking element, designed for efficient connection and disconnection along an insertion axis.

### BACKGROUND OF THE INVENTION

Connector assemblies are widely used in various industries to facilitate the secure and efficient connection of different components. Traditional connectors often rely on locking mechanisms that do not allow for adjustments based on spatial constraints or ease of access.

### PRIOR ART

A known solution is the use of bayonet locking mechanisms, which provide a secure connection through a simple twisting action. However, traditional designs complicate the visibility and recognition of coding during assembly, making the installation process more difficult.

The drawback of these existing solutions is their lack of flexibility and the difficulty in connecting due to the bayonet locking element that complicates the visibility and recognition of coding during connecting. This often results in inefficiencies, particularly in confined spaces, as they cannot facilitate easier handling and installation.

In the context of connectors, "coding" refers to the design features that ensure only compatible connectors can be mated (connected) together. This may include specific shapes, colors, or patterns that help align and orient the connectors correctly, preventing incorrect connections and ensuring reliable operation. Coding enhances safety and functionality by guiding users during the assembly process.

In the context of this application, the expression "coding" is especially used for the arrangement of the elements on the mating face of connectors.

### TASK

The problem addressed by the present invention is to provide a connector assembly that overcomes these limitations. Thereby the visibility and recognition of coding should be enhanced, thereby simplifying the connecting process without compromising the secure connection provided by the bayonet locking mechanism.

The above-mentioned issues as well as the task is solved by a connector assembly, a first connector, a second connector, a manufacturing process and a method of mating the connector assembly according to the independent claims.

### SUMMARY OF THE INVENTION

According to the invention, a connector assembly comprises a first connector with a housing and a female bayonet locking element as well as at least one first centering element; a second connector with at least one male bayonet locking element and at least one second centering element; wherein the connector assembly is designed such that the first connector and the second connector can be connected and disconnected by a relative movement in a direction parallel to an insertion axis for performing a connection process, wherein the dimension of the housing of the first connector in a direction parallel to the insertion axis corresponds to a housing length, characterized in that the female bayonet locking element is displaceable relative to the housing in a direction parallel to the insertion axis, wherein the total dimension of the first connector in a direction parallel to the insertion axis corresponds to a connector length, into a rearward position whereby the connector length is reduced.

The technical advantage of this configuration is the enhanced visibility during the connecting process. By allowing the bayonet locking element to move into a rearward position, the connector design facilitates easier recognition and alignment of coding elements, thereby reducing the potential for connecting errors and improving overall efficiency and accuracy.

Unlike conventional connector designs where bayonet elements may be displaced for manufacturing or assembly purposes, the present invention specifically provides for displacement of the female bayonet locking element to enhance visibility and recognition of coding features on the mating face of the first connector. This allows a user to visually identify and verify the coding arrangement prior to and during the connection process, thereby facilitating correct alignment and reducing the risk of mating incompatible connectors.

The connector assembly, that is the first connector and the second connector, may be configured as a hybrid connector assembly, combining both electrical and fluid connections within a single assembly. This hybrid configuration allows the connector to transmit electrical signals and fluid media simultaneously, making it highly versatile for various applications. For instance, in industrial automation, such connectors can be used to power and control machinery while also supplying necessary fluids like coolants or lubricants. The integration of electrical and fluid connectors into one unit eliminates the need for separate connection systems, thereby reducing the overall complexity and space requirements. This design not only saves installation time but also minimizes potential points of failure, enhancing the reliability of the system. The fluid connectors are typically made from corrosion-resistant materials to ensure longevity and maintain a secure seal under various environmental conditions. The electrical connectors may feature gold-plated surfaces or coatings of silver, platinum, copper, or copper alloys to ensure optimal conductivity and durability. By combining these functionalities, the hybrid connector offers a comprehensive solution that meets the demanding requirements of modern industrial and technological applications, providing both efficiency and robustness in a compact form factor.

The combination of the hybrid fluid and electrical functionality with the displaceable female bayonet locking element is particularly advantageous. In hybrid connector applications, correct alignment and mating is of heightened importance due to the presence of both fluid seals and electrical contacts. The enhanced visibility of coding provided by the rearward displacement of the female bayonet locking element allows users to verify correct orientation before engaging the fluid and electrical connections, thereby reducing the risk of fluid leakage or electrical misconnection.

According to a preferred embodiment of the invention, the first connector is designed in a way that in the rearward position, the connector length in a direction parallel to the insertion axis corresponds to the housing length.

This configuration offers the technical advantage of optimizing the compactness of the assembly. When the connector length matches the housing length, it ensures that the connector occupies minimal space, making it ideal for applications with strict spatial constraints. This also contributes to an aesthetically streamlined appearance, enhancing the integration of the connector into various systems.

Furthermore, the technical advantage of this configuration is the further enhanced visibility during the connecting process. By allowing the bayonet locking element to move into a rearward position in which the connector length corresponds to the housing length, the connector design facilitates easier recognition and alignment of coding elements, thereby reducing the potential for connecting errors and improving overall efficiency and accuracy.

According to a preferred embodiment of the invention, the at least one first centering element is a centering recess and the at least one second centering element is a corresponding centering projection that engages the centering recess to ensure error-free alignment during the connection process.

The technical advantage of this arrangement is the precise and reliable alignment it provides. By engaging a centering recess with a corresponding projection, the design minimizes misalignment risks, ensuring that the connectors are properly aligned each time, which is crucial for maintaining a secure and efficient connection.

The combination of the centering elements with the displaceable female bayonet locking element provides a synergistic effect. When the female bayonet locking element is in the rearward position, the centering elements on the mating face of the first connector become visible and accessible, allowing a user to pre-align the centering elements of the first and second connectors before initiating the connection process. This pre-alignment capability, enabled by the retraction of the female bayonet locking element, may reduce connection time and minimise the risk of damage to the centering elements or other connector components during mating.

According to a preferred embodiment of the invention, the at least one second centering element is a centering recess and the at least one first centering element is a corresponding centering projection that engages the centering recess to ensure error-free alignment during the connection process.

This embodiment offers flexibility in design, allowing for alternative configurations that can be adapted to specific requirements. The technical advantage lies in the ability to customize the centering mechanism based on the application, providing versatility and adaptability to different use cases.

Moreover, the technical advantage of this arrangement is the precise and reliable alignment it provides. By engaging a centering recess with a corresponding projection, the design minimizes misalignment risks, ensuring that the connectors are properly aligned each time, which is crucial for maintaining a secure and efficient connection.

According to a preferred embodiment of the invention, the at least one first centering element and the at least one second centering element both having a mutually corresponding conical shape to achieve self-centering.

The technical advantage of this feature is that it facilitates automatic alignment, reducing the need for manual adjustments and ensuring a quick and efficient connection process. This self-centering capability significantly enhances the ease of use, making the assembly and disassembly processes faster and more intuitive.

According to a preferred embodiment of the invention, the female bayonet locking element comprises at least one groove that provides guidance for the at least one male bayonet locking element and enables the locking process, wherein the connector assembly preferably has three grooves and preferably three male bayonet locking elements.

This configuration enhances the locking strength and stability, providing a robust connection that withstands mechanical stresses and vibrations. The technical advantage here is the increased reliability and durability of the connection, ensuring that it remains secure under various operational conditions.

According to a preferred embodiment of the invention, the connector assembly integrates both fluid-conducting contacts and electrical contacts, wherein the fluid-conducting contacts consist of a corrosion-resistant material to ensure the longevity of the connection, and/or the electrical contacts have a gold-plated surface or a coating of silver, platinum, copper, or copper alloys to ensure improved conductivity.

The dual-functionality design offers the advantage of versatility, allowing the connector to be used in a wide range of applications involving both fluid and electrical connections. This integration simplifies the design and reduces the need for multiple separate components, enhancing efficiency and reducing costs.

According to a preferred embodiment of the invention, the female bayonet locking element comprises a spring mechanism that supports the movement into the rearward position and/or acts against the movement into the rearward position.

This feature provides the advantage of controlled movement, enhancing the ease of use and ensuring that the locking mechanism operates smoothly under various conditions. The spring mechanism adds a layer of functionality that can either facilitate or resist movement, depending on the design requirements, offering flexibility in operation.

According to the invention, the first connector for use in a connector assembly is separately disclosed as well, standing alone, with any of the above mentioned features or a technically reasonable selection of these.

The first connector is preferably a standalone module within the connector assembly.

According to the invention, the second connector for use in a connector assembly is separately disclosed as well, standing alone, with any of the above mentioned features or a technically reasonable selection of these.

The second connector is preferably a standalone module within the connector assembly.

The present invention also relates to a connector assembly (that is a system) composed of several components, which are functional both in combination and in isolation.

Thus, the application also discloses the above mentioned connectors (first and second) in isolated form, as well as in combination within a connector assembly (system).

### The Figures depict:

- Figure 1: shows a connector assembly comprising a first connector 1 with a female bayonet locking element 11 and a second connector 2 with male bayonet locking elements 21. In the shown configuration, the coding of the first connector 1 is covered by the female bayonet locking element 11.
- Figure 2: shows the connector assembly as mentioned with regard to figure 1. However, in the shown configuration, the coding of the first connector 1 can freely be mentioned since the female bayonet locking element 11 is in a rearward position.
- Figure 3: is a schematic illustration of the first connector 1 explaining the housing length a and the connector length b.

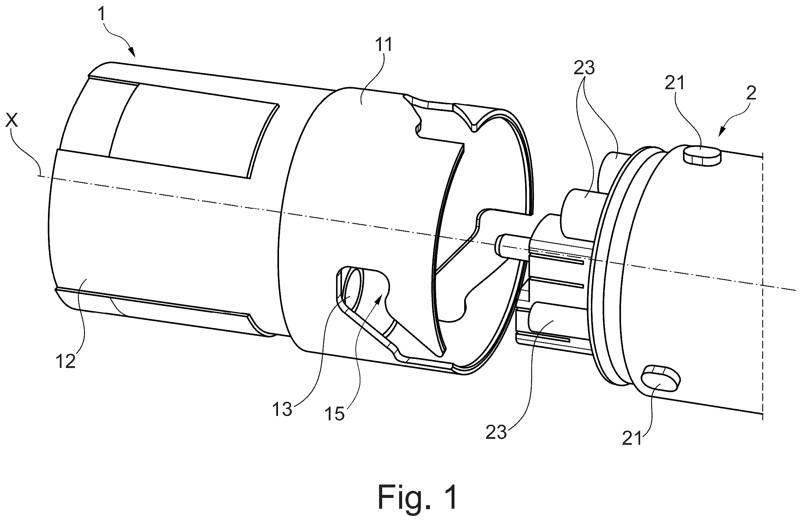

**Fig.** 1 provides a detailed illustration of a connector assembly comprising a first connector 1 and a second connector 2. The first connector 1 includes a housing 12 and a female bayonet locking element 11, which is designed to be movable with respect to the housing 12. Additionally, the first connector 1 features a first centering element 13, shown as a centering recess. Furthermore, the bayonet locking element 11 features a groove 15 for guiding and locking purposes.

The second connector 2 is equipped with a male bayonet locking element 21 that interacts with the female bayonet locking element 11 to create a secure connection. The second connector 2 also includes a second centering element 23, depicted as a centering projection, which engages with the first centering element 13 of the first connector 1. These centering elements ensure precise alignment of the connectors along the insertion axis X.

The connector assembly is designed so that the two connectors 1 and 2 can be connected and disconnected through relative movement along the insertion axis X. This allows for easy assembly and disassembly, which is particularly advantageous in applications where quick connections are required.

A key aspect of this design is the ability to shift the female bayonet locking element 11 into a rearward position as will be shown in the next Figure, reducing the overall length of the first connector 1. This feature enhances visibility and recognition of coding during the connection process, thus improving user-friendliness and assembly efficiency.

The Figure also demonstrates how the combination of bayonet locking elements 11 and 21 with centering elements 13 and 23 ensures a stable and secure connection.

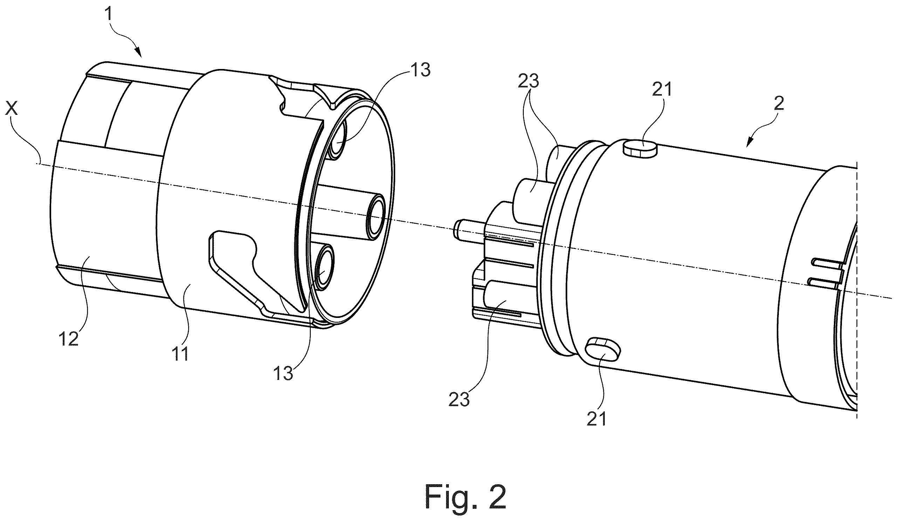

**Fig.** 2 shows another view of the same connector assembly as shown in Figure 1. Figure 2 highlights a crucial difference from Figure 1 by illustrating the improved visibility of the coding of the first connector 1. In Figure 1, the female bayonet locking element 11 obscures the coding, making it challenging to align the connectors (first connector 1 and second connector 2) accurately during assembly.

In contrast, Figure 2 shows the female bayonet locking element 11 retracted into a rearward position, fully exposing the coding of the first connector 1. This unobstructed view significantly enhances the ease of aligning the first connector 1 with the second connector 2, facilitating a more straightforward and error-free connecting process.

The clear visibility of the coding ensures that users can quickly and precisely orient the connectors (first connector 1 and second connector 2) along the insertion axis X, reducing the likelihood of misalignment. This feature is particularly beneficial in applications where rapid and accurate connections are essential.

Figure 2 underscores the advantage of the design, where the ability to move the female bayonet locking element 11 into a rearward position allows for better visibility and recognition of coding. This improvement over the configuration in Figure 1 enhances user-friendliness and efficiency, making the connector assembly more intuitive and reliable in practice.

In the configuration a shown in Figure 2, the length b of the entire connector 1 (that means the length of the female bayonet locking element 11 and the housing 12 together) in a direction parallel to the insertion axis X corresponds to the housing length a.

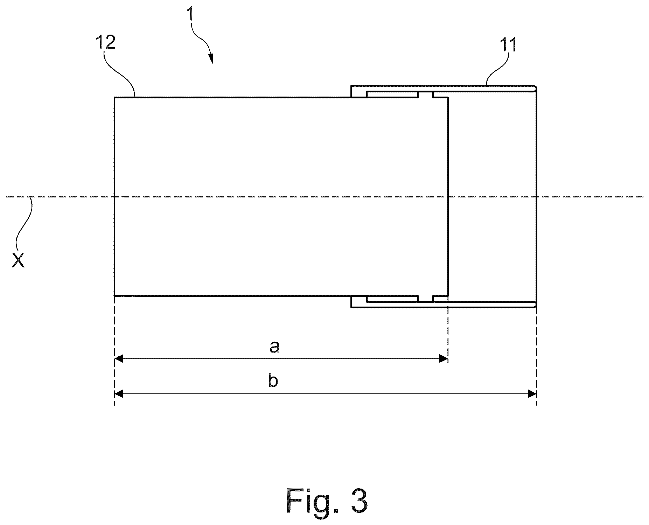

**Fig.** 3 provides a schematic view of the first connector 1, focusing on its dimensional aspects and the relationship between its components. The Figure illustrates the housing 12 and the female bayonet locking element 11, emphasizing their alignment along the insertion axis X.

A key feature depicted in Figure 3 is the ability of the female bayonet locking element 11 to move into a rearward position. This movement is critical for reducing the overall connector length from the connector length b to the housing length a. The schematic clearly shows how, in this rearward position, the dimensions of the connector become more compact, aligning precisely with the housing length a.

In the configuration a shown in Figure 3, the female bayonet locking element 11 is displaced relative to the housing 12 in a direction parallel to the insertion axis X (to the left, with respect to the illustration in Figure 3) into a rearward position whereby the connector length b is reduced.

In simplified terms, the bayonet locking element 11 could be moved even further to the left (with respect to the illustration in Figure 3) so that both parts (female bayonet locking element 11 and housing 12) slide into each other completely. Then, the connector length b and the housing length a would be the same since the bayonet locking element 11 would not extend anymore.

Moreover, according to another embodiment, one or more of the centering elements 13 and 23 may alternatively serve not only for centering but also for establishing an electrical connection. In this configuration, the centering recess 13 on the first connector 1 and the centering projection 23 on the second connector 2 are designed to fulfill dual functions. While these elements primarily ensure precise alignment and centering of the first connector 1 and the second connector 2 along the insertion axis X, they can also be configured to form part of the electrical circuitry within the connector assembly.

For example, the centering recess 13 on the first connector 1 can be electrically conductive and connected to an internal electrical contact within the housing 12. Similarly, the centering projection 23 on the second connector 2 can be designed to electrically interface with the corresponding centering recess 13 upon engagement. This dual-function design allows the centering elements 13, 23 to contribute to both the mechanical stability and the electrical functionality of the connector assembly.

It is essential to note that while one or more of the centering elements 13, 23 may serve an electrical connection role, at least one pair of these centering 13, 23 elements must still primarily function as centering mechanisms. This ensures that the connectors achieve the necessary precise alignment during the mating process, thereby maintaining the overall integrity and reliability of the connection. The centering function is crucial for ensuring that the connectors 1, 2 are properly aligned and securely connected along the insertion axis X.

Moreover, alternatively, some of the centering elements 13 and 23 may be configured exclusively for centering, while others are dedicated solely to establishing an electrical connection. In this alternative configuration, specific centering recesses 13 and centering projections 23 are designed only for alignment purposes, ensuring that the connectors 1, 2 are aligned correctly during the connection process. Separate centering elements 13 and 23, distinct from those used for centering, can be configured to create electrical connections, transmitting electrical signals between the first and second connectors 1, 2.

By integrating electrical connection capabilities into some centering elements 13, 23 and dedicating others exclusively to centering or electrical functions, the connector assembly can achieve a more versatile and efficient design. This approach allows for the optimization of both mechanical and electrical functionalities, making the connector assembly suitable for a wide range of industrial and technological applications. The multifunctional and specialized centering elements 13 and 23 enhance the connector's performance while maintaining the essential centering function required for a secure and reliable connection.

### Reference Numbers

- 1: first connector
- 2: second connector
- 11: female bayonet locking element
- 12: housing
- 13: first centering element
- 15: groove
- 21: male bayonet locking element
- 23: second centering element
- X: insertion axis
- a: housing length
- b: connector length

## Claims

1. Connector assembly, comprising:
a first connector (1) with a housing (12) and a female bayonet locking element (11) as well as at least one first centering element (13);
a second connector (2) with at least one male bayonet locking element (21) and at least one second centering element (23);
wherein the connector assembly is designed such that the first connector (1) and the second connector (2) can be connected and disconnected by a relative movement in a direction parallel to an insertion axis (X) for performing a connection process,
wherein the dimension of the housing (12) of the first connector (1) in a direction parallel to the insertion axis (X) corresponds to a housing length (a),
wherein the female bayonet locking element (11) is displaceable relative to the housing (12) in a direction parallel to the insertion axis (X) into a rearward position, wherein the total dimension of the first connector (1) in a direction parallel to the insertion axis (X) corresponds to a connector length (b), and whereby in the rearward position the connector length (b) is reduced.

2. Connector assembly according to claim 1, wherein the first connector (1) is designed in a way that in the rearward position the connector length (b) in a direction parallel to the insertion axis (X) corresponds to the housing length (a).

3. Connector assembly according to any of the preceding claims, wherein the at least one first centering element (13) is a centering recess and the at least one second centering element (23) is a corresponding centering projection that engages the centering recess to ensure error-free alignment during the connection process.

4. Connector assembly according to claim 1 or 2, wherein the at least one second centering element (23) is a centering recess and the at least one first centering element (13) is a corresponding centering projection that engages the centering recess to ensure error-free alignment during the connection process.

5. Connector assembly according to any of the preceding claims, wherein the at least one first centering element (13) and the at least one second centering element (23) both having a mutually corresponding conical shape to achieve self-centering.

6. Connector assembly according to any of the preceding claims, wherein the female bayonet locking element (11) comprises at least one groove (15) that provides guidance for the at least one male bayonet locking element (21) and enables the locking process, wherein the connector assembly preferably has three grooves (15) and preferably three male bayonet locking elements (21).

7. Connector assembly according to any of the preceding claims, wherein the connector assembly integrates both fluid-conducting contacts and electrical contacts, wherein
the fluid-conducting contacts consist of a corrosion-resistant material to ensure the longevity of the connection, and/or
the electrical contacts have a gold-plated surface or a coating of silver, platinum, copper, or copper alloys to ensure improved conductivity.

8. Connector assembly according to any of the preceding claims, wherein the female bayonet locking element (11) comprises a spring mechanism that supports the movement into the rearward position and/or acts against the movement into the rearward position.

9. First connector (1) for use in a connector assembly according to any of the preceding claims.

10. Second connector (2) for use in a connector assembly according to any of claims 1 to 8.

11. Manufacturing method of a connector assembly, a first connector (1), and/or a second connector (2) according to any of the preceding claims, comprising the steps of forming the housing (12) and the female bayonet locking element (11) such that the female bayonet locking element (11) is displaceable relative to the housing (12) in a direction parallel to the insertion axis (X) into the rearward position.

12. A method of mating the connector assembly of claims 1 to 8, comprising the steps of:
- Providing the first connector (1) and the second connector (2);
- Displacing the female bayonet locking element (11) along the insertion axis (X) to unmask the mating face;
- Centering the first connector (1) and the second connector (2);
- Mating the first connector (1) and the second connector (2) along the insertion axis (X) in a direction opposite to the direction in the displacing step;
- Rotating the female bayonet locking element (11) to lock the first connector (1) and the second connector (2) together.
